Europäisches Patentamt

European Patent Office

Office européen des brevets

(11) Publication number: **0 525 413 A2**

## EUROPEAN PATENT APPLICATION

(21) Application number: **92111069.8**

(22) Date of filing: **30.06.92**

(51) Int. Cl.⁵: **G06K 11/16**

(30) Priority: **09.07.91 JP 168448/91**
**09.07.91 JP 168449/91**
**09.07.91 JP 168450/91**

(43) Date of publication of application:
**03.02.93 Bulletin 93/05**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Saeki, Shinji**
**c/o Seiko Instruments Inc., 31 1, Kameido**
**6-chome**
**Koto-ko, Tokyo(JP)**

(74) Representative: **Fleuchaus, Leo, Dipl.-Ing. et al**
**Melchiorstrasse 42**
**W-8000 München 71(DE)**

(54) Coordinate input apparatus having correction sense line.

(57) A correction sense line 1 is laid in the peripheral portion of a first sense line group S1 and a second sense line group S2, and ON/OFF means for the correction sense line 1 is provided. Moreover, the correction sense line 1 is excited in an opposite phase to the first sense line group S1. In the peripheral portion of the first sense line group S1 or the second sense line group S2, there is produced an induction signal for causing an error at the time of calculating the coordinates. This induction signal is attenuated by providing the correction sense line 1.

FIG. 1

EP 0 525 413 A2

## BACKGROUND OF THE INVENTION

The present invention relates to a coordinate input apparatus for inputting coordinates to a data processing system such as a computer and, more particularly, to a coordinate input apparatus applying the electromagnetic induction phenomenon.
The coordinate input apparatus of the prior art is exemplified by our invention disclosed in Japanese Patent Laid-Open No. 249019/1990.

This coordinate reading apparatus makes use of the fact that a coordinate indicator has its resonance circuit resonated by an alternating magnetic field, which is established from a first one of two sense line groups laid respectively along X-Y orthogonal coordinate axes, so that an induction signal is induced in the second sense line group by the alternating magnetic signal produced by the resonated coordinate indicator. This coordinate indicator has its position or coordinates determined by comparing the amplitudes of the induction signals detected at that time in accordance with the positions of the selected first and second sense lines.

Basically, the aforementioned first sense line group and second sense line group intersect at a right angle so that a direct induction signal is not produced in the second sense line group by the alternating magnetic field established from the first sense line group but is produced if a sense line in a peripheral portion of the first or second sense line group.

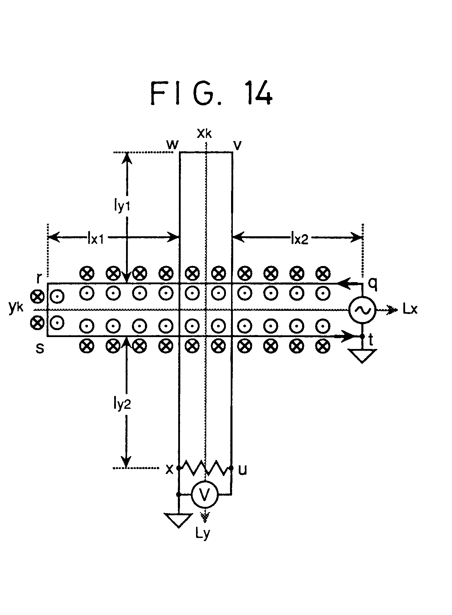

Fig. 14 is an explanatory diagram for explaining the behavior of an induction between a first sense line group and a second sense line group and shows one sense line yk formed of a qrst portion for generating a magnetic field and a sense line xk formed of a uvwx portion for detecting an induction signal. On the other hand, a symbol indicating the direction of a magnetic field, as shown, is one when an electric current flows in the direction of the qrst portion, as indicated by the arrow, in the sense line yk. If a distance ly1 and ly2 and a distance lx1 and lx2 are sufficient, as shown in Fig. 14, the sum of interlinking magnetic fluxes of the sense line xk is substantially zero even in the presence of the magnetic field established from the sense line xk so that no induction is established by the magnetic field established from the sense line yk. If, however, either the distance ly1 and ly2 or the distance lx1 and lx2 is short, the condition for the zero of the sum of the aforementioned interlinking magnetic fluxes is not satisfied any more. If the distance ly1 in Fig. 14 is short, for example, that portion of the magnetic field established from the sense line yk, which is shown over the qr portion (as directed from the surface to the back of the sheet of the drawing), increases in the failure to interlink with the sense line xk. If the distance lx1 is short, on the other hand, influences are exerted from the magnetic field (as directed from the back to the surface of the sheet of the drawing), which is established from the rs portion of the sense line yk. As a result, if either the distance ly1 and ly2 or the distance lx1 and lx2 is short, the sum of the aforementioned interlinking magnetic fluxes is not zero so that the induction signal by the magnetic field established from the sense line yk is produced in the sense line xk. As a result, in the peripheral portion of the sense line group, the induction signal due to the influences by other than the coordinate indicator, i.e., the induction signal produced by the coupling between the two sense line groups causes an error in the calculation of the coordinates by comparing the magnitudes of the induction signals.

## SUMMARY OF THE INVENTION

An object of the present invention is to provide a coordinate input apparatus which is enabled to calculate coordinates highly accurately even in the peripheral portion of its sense line group by eliminating such defects of the prior art.

According to the present invention, there is provided a coordinate input apparatus which comprises: a coordinate indicator having a resonance circuit composed of at least a coil and a capacitor; a first sense line group having a plurality of sense lines laid in parallel with one of X-Y orthogonal coordinate axes; a second sense line group having a plurality of sense lines laid in parallel with the other axis; a first scanning circuit for selecting said first sense line group sequentially; an exciting circuit connected with said first scanning circuit for exciting said first sense line group; a second scanning circuit for selecting said second sense line group sequentially; an induction signal detecting circuit connected with said second scanning circuit for detecting an induction signal induced in said second sense line group; and a control circuit for detecting coordinates from said induction signal detected by said induction signal detecting circuit. The coordinate input apparatus is characterized: in that a correction sense line and ON/OFF means for excitation of said correction sense line are disposed in the peripheral portions of said first and second sense line groups; and in that said correction sense line is excited in an opposite phase to said first sense line group. Further, the coordinate input apparatus is characterized: in that said correction sense line has its increased number of turns so that it may not intersect said second sense line group at the side of the folded portion of said first sense line group; furthermore, in that said ON/OFF means for the excitation has an excitation signal control means.

In the coordinate input apparatus according to the present invention, an induction signal is produced by a coupling between the first and second sense line groups if a sense line in the peripheral portion of the two sense line groups is selected. Since the induction signal is attenuated by a magnetic field established from the collection sense line, the coordinates can be calculated highly accurately even in the peripheral portion of the sense line groups.

## BRIEF DESCRIPTION OF THE DRAWINGS

Fig. 1 is a diagram showing the structure of one embodiment of the present invention;

Fig. 2 is a detailed diagram of the sense lines;

Fig. 3 is an explanatory diagram of the effects of the correction sense line;

Fig. 4 is a circuit diagram of the excitation circuit;

Fig. 5 is a detailed diagram of the sense lines according to another embodiment;

Fig. 6 is a detailed diagram of the sense lines according to another embodiment;

Fig. 7 is a detailed diagram of the sense lines;

Fig. 8 is an explanatory diagram of the effect of the correction sense line of the present embodiment;

Fig. 9 is a circuit diagram of the scanning circuit;

Fig. 10 is a diagram showing the control values (in decimal notation) of the control signal 44;

Fig. 11 is a diagram showing the induction signal which is produced by the coupling between the two sense line groups according to the present embodiment;

Fig. 12 is a diagram showing the induction signal which is produced by the coupling between the two sense line groups of the prior art;

Fig. 13 is a detailed diagram of the sense lines according to another embodiment; and

Fig. 14 is an explanatory diagram of the induction between the two sense line groups.

## DETAILED DESCRIPTION OF THE PREFERRED EMBODIMENTS

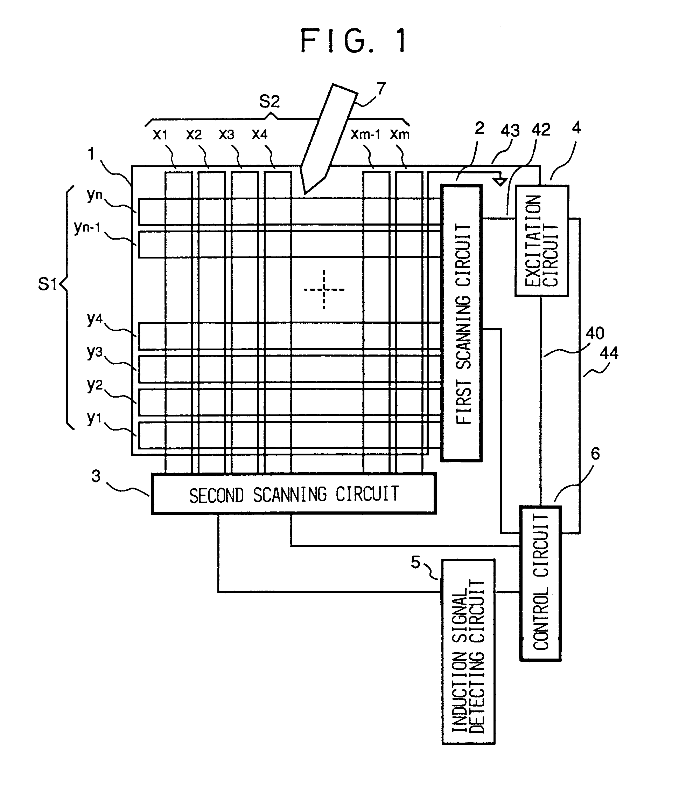

One embodiment of the present invention will be described in the following with reference to Figs. 1 to 4. Fig. 1 is a diagram showing the structure of a coordinate input apparatus according to the present invention. In Fig. 1: reference numeral 1 designates a correction sense line; characters S1 designate a first sense line group having sense lines y1 to yn; characters S2 a second sense line group having sense lines x1 to xm; numeral 2 a first scanning circuit for selecting the first sense line group S1 sequentially; numeral 3 a second scanning circuit for selecting the second sense line group S2 sequentially; numeral 4 an excitation circuit for exciting the first sense line group S1 and the correction sense line 1; numeral 5 an induction signal detecting circuit for detecting an induction signal produced in the second sense line group S2; numeral 6 a control circuit constructed of an ordinary CPU circuit; and numeral 7 a coordinate indicator having a resonance circuit (although not shown). Incidentally, the sense lines are simply shown to prevent the drawing from being complicated.

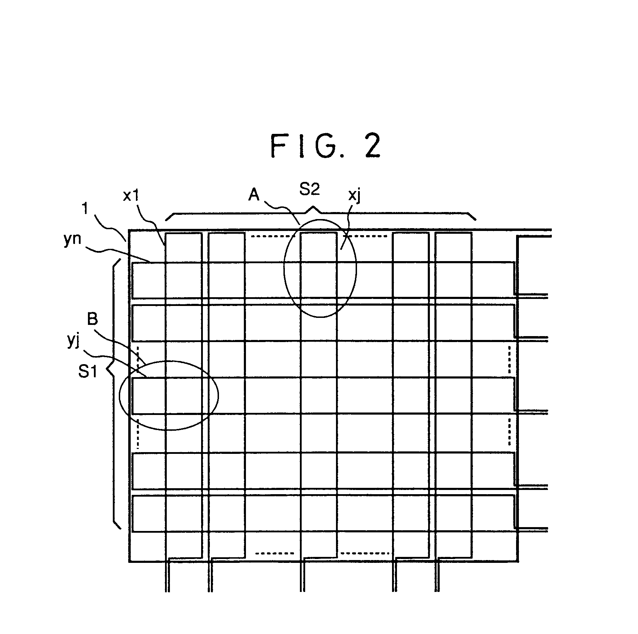

Fig. 2 is a detailed diagram showing the sense lines. The reference characters appearing in Fig. 2 are identical to those of Fig. 1.

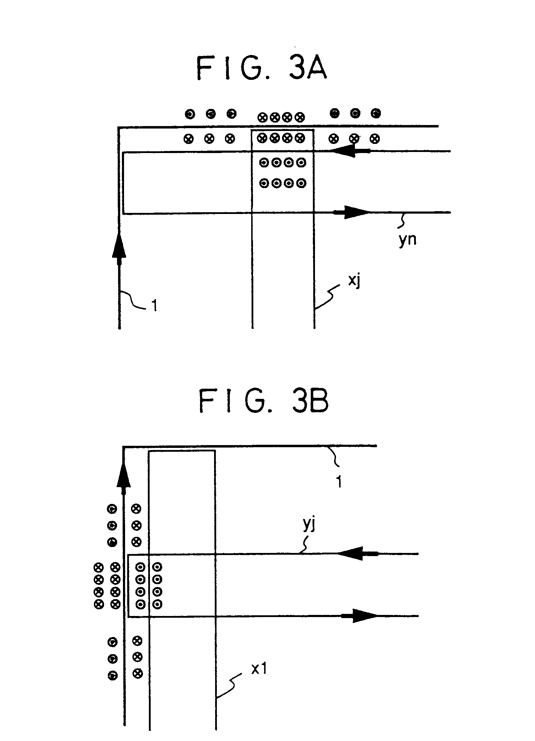

Fig. 3 is a diagram for explaining the effects of the correction sense line 1.

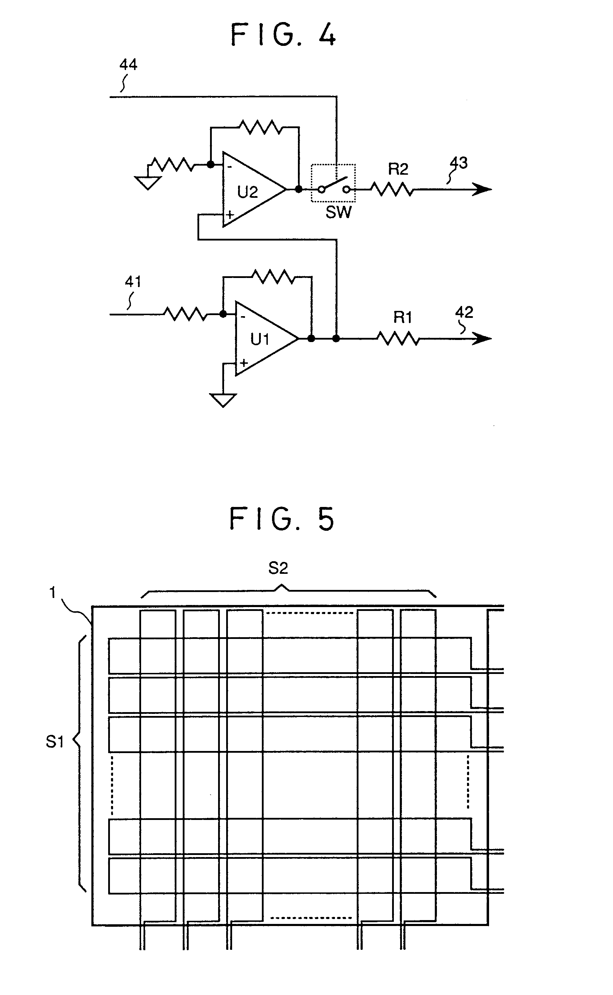

Fig. 4 is a circuit diagram of the excitation circuit 4.

The operations of the present embodiment will be described in the following. In Fig. 1, the first sense line group S1 is sequentially selected and excited by the first scanning circuit 2. As the coordinate indicator 7 approaches the first sense line group S1, its resonance circuit is resonated by an alternating magnetic field established from the first sense line group S1, so that an induction signal is induced in the second sense line group S2 by the alternating magnetic field established by the resonated coordinate indicator 7. This induction signal is subjected to a predetermined processing by the induction signal detecting circuit 5 and is inputted to the control circuit 6. This control circuit 6 determines the position, i.e., the coordinates of the coordinate indicator by comparing the amplitudes of the induction signals detected at that time, in accordance with the positions of the selected first and second sense lines. Incidentally, the details of the operations described above and the coordinate calculating method will not be further described because they are disclosed in Japanese Patent Laid-Open No. 249019/1990.

Next, the detail of the correction sense line 1 will be described in the following. Fig. 2 is a detailed diagram of the sense line groups S1 and S2 and the correction sense line 1 of the embodiment shown in Fig. 1. The correction sense line 1 is laid in the peripheral portion of the first sense line group S1 and the second sense line group S2.

First of all, the effect of the correction sense line in the peripheral portion of the first sense line group S1 will be described. Fig. 3A is an enlarged diagram of the A portion of Fig. 2 and shows one sense line of each of the first sense line group S1 and the second sense line group S2. When an electric current flows in the direction of arrow in the sense line yn of the first sense line group S1, a magnetic field is established from the back to the surface of the sheet of the drawing inside of the loop of the sense line yn, whereas a magnetic field is established from the surface to the back of the sheet of the drawing outside of the loop. In this case, the sense line xj of the second sense line group S2 does not interlink with that of the magnetic field established from the sense line yn, which is located outside of the folded portion of the sense line xj (as directed from the surface to the back of the sheet of the drawing), so that the induction signal is accordingly produced. If, at this time, a predetermined current is fed in the direction arrow in the correction sense line 1, a magnetic field, as directed from the surface to the back of the sheet of the drawing, is established inside of the correction sense line 1, i.e., at the side of the sense line xj. Thus, that of the magnetic fields established from the sense line yn, which has failed to interlink with the sense line xj, can be compensated by the correction sense line 1 to attenuate the induction signal produced in the sense line xj.

Next, the effect of the correction sense line 1 in the peripheral portion of the second sense line group S2 will be described in the following. Fig. 3B is an enlarged diagram of the B portion of Fig. 2 and shows one sense line of each of the first sense line group S1 and the second sense line group S2. When an electric current flows in the direction of arrow in the sense line yj, a magnetic field is established from the back to the surface of the sheet of the drawing inside of the loop of the sense line yj, whereas a magnetic field is established from the surface to the back of the sheet of the drawing outside of the loop. In this case, the sense line xl interlinks with that of the magnetic field established from the sense line yj, which comes from the folded portion of the sense line yj (as directed from the back to the surface of the sheet of the drawing), so that the induction signal is accordingly produced. If, at this time, a predetermined current is fed in the direction arrow in the correction sense line 1, a magnetic field, as directed from the surface to the back of the sheet of the drawing, is established inside of the correction sense line 1, i.e., at the side of the sense line xl. Thus, that of the magnetic fields established from the sense line yj, which has interlinked with the sense line x1, can be extinguished by the correction sense line 1 to attenuate the induction signal produced in the sense line x1. In either the case of Fig. 3A or 3B, as is apparent from the description thus far made, the induction signal produced in the sense line x1 can be attenuated by feeding the correction sense line 1 with an electric current reversed from that flowing in the first sense line group S1 i.e., by generating a magnetic field in an opposite phase to that of the first sense line group S1.

Fig. 4 shows a circuit diagram of the excitation circuit 4. Fig. 4 shows the final stage of the excitation circuit, which is constructed of a well-known operation amplifier. An excitation signal 41 is transformed into a sine wave from an excitation signal 40 outputted from the control circuit 6. The excitation signal 41 is amplified to a predetermined voltage by an operation amplifier U1 so that it is outputted as an excitation signal 42 to the first scanning circuit 2 through a current limiting resistor R1, and is amplified to a predetermined voltage by an operation amplifier U2 so that it is outputted as an excitation signal 43 to the correction sense line 1 through a switch element SW and a current limiting resistor R2 thereby to excite the correction sense line 1. The switch element SW is turned on to excite the correction sense line 1 by a control signal 44 which is outputted from the control circuit 6 only when the sense line in the peripheral portion of the sense line groups S1 and S2, i.e., the sense line X1, xm or y1 or the sense line yn is selected in Fig. 1. By controlling the switch element SW in this way, it is possible to attenuate the induction which is produce by the coupling between the two sense line groups, which might otherwise cause an error at the time of calculating the coordinates, in the peripheral portion f the sense line group S1 or S2.

Incidentally, in the embodiment shown in Fig. 4, the excitation signal 42 and the excitation signal 43 are in phase so that a magnetic field in an opposite phase to that of the sense line group S1 can be established from the correction sense line 1 by reversing the turning direction of the correction sense line 1 from that of the first sense line group S1.

Fig. 5 shows a detailed diagram of sense lines according to another embodiment of the present invention. In Fig. 5, as compared with the embodiment of Fig. 2, the correction sense line 1 is so slightly widened in the transverse direction that the gap from the folded portion of the first sense line group S1 is wider than that between the folded portion of the correction sense line 1 and the second sense line group S2. This is because the influences of the magnetic field established by the correction sense line 1 are different between the case of the peripheral portion of the first sense line group S1, and the peripheral portion of the second sense line group S2. In case of the peripheral portion of the first sense line group S1, as shown in Fig. 3A, mainly the folded portion only of the sense line x is influenced by the magnetic field established by the correction sense line 1. In case of the peripheral portion of the second sense line group S2 shown in Fig. 3B, on the contrary, the sense line x is influenced generally throughout its whole length by the magnetic field established by the correction sense line 1. These influences are higher than those of the foregoing case. If, therefore, the value of the current to be fed to the correction sense line 1 is determined to properly attenuate the induction signal which is produced by the coupling between the two sense line groups S1 and S2 in the peripheral potion of the second sense line group S2, the induction signal cannot be sufficiently attenuated in the peripheral portion of the first sense line group S1. Therefore, by making the gap from the folded portion of the first sense line group S1 wider than that between the correction sense line 1 and the folded portion of the second sense line group S2, the influences of the magnetic field established by the correction sense line 1 and received by the sense line x are reduced in the peripheral portion of the second sense line group S2. Thus, the induction signal produced by the coupling between the two sense line groups can be more attenuated as a whole by reducing the difference between the influences of the magnetic fields which are established by the correction sense line 1 for the aforementioned two cases.

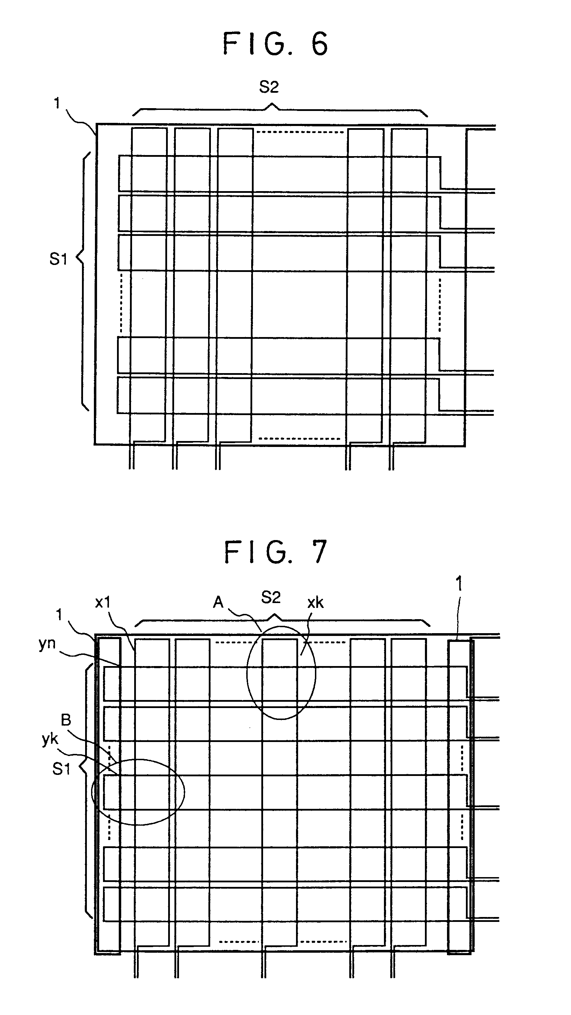

Fig. 6 shows a detailed diagram of sense lines according to another embodiment of the present invention. In the embodiment of Fig. 6, as compared with that shown in Fig. 2, the gap from the folded portion of the first sense line group S1 is made wider than that between the correction sense line 1 and the folded portion of the second sense line group S2 by shortening the length of the first sense line group S1 slightly. In the present embodiment, too, it is possible to achieve effects similar to those of the embodiment shown in Fig. 5. In the peripheral portion of the second sense line group S2, according to the present embodiment, the influences of the magnetic field received by the sense line x and established by the correction sense line 1 are not reduced, but the induction signal produced by the coupling between the two sense line groups S1 and S2 in the peripheral portion of the second sense line group S2 is positively increased to solve the problem of the difference in the influences of the magnetic field established by the correction sense line 1 in the peripheral portion of the two sense line groups S1 and S2. According to the present embodiment, moreover, the size of the loop of the correction sense line 1 can be suppressed to a smaller one than that of the embodiment shown in Fig. 5, to provide a coordinate input apparatus which can accomplish the coordinate calculations accurately even in the peripheral portion of the sense line groups while keeping its own difference small.

Other embodiment of the present invention will be described in the following with reference to Figs. 7 to 8. Fig. 7 is a detailed diagram of the sense line groups S1 and S2 and the correction sense line 1. The correction sense line 1 is laid in the peripheral portion of the first sense line group S1 and the second sense line group S2. Moreover, the correction sense line 1 has its number of turns increased by one so that it may not intersect the second sense line group S2 at the side (i.e., at the righthand and lefthand of the correction sense line 1, as shown) of the folded portion of the first sense line group S1.

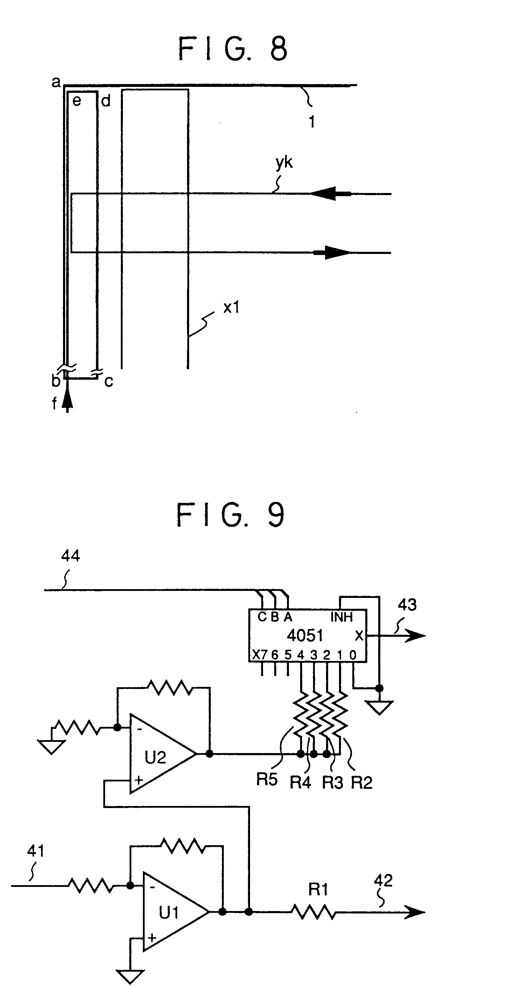

Here will be described the effect in case the number of turns of the correction sense line 1 is increased by one at the righthand and lefthand. Fig. 8 is an explanatory diagram of the effect of the correction sense line 1 of the present embodiment. The portion, in which the number of turns of the correction sense line 1 is increased by one, is located at a bcdef portion. At first, assuming that the lengths of the portion bc and the portion de of the correction sense line 1 be zero, let the case be considered, in which the portion ab, the portion cd and the portion ef of the correction sense line 1 are on a line. In this case, the following relations hold:

$$| \text{Hab} | = | - \text{Hcd} | = | \text{Hef} |,$$

if those components of the magnetic fields established from the portions ab, cd and ef of the correction sense line 1, which interlink with the sense line xl, are designated at Hab, Hcd and Hef. This is because an excitation current will flow in the portion cd of the correction sense line 1 with a direction reversed from that of the portions ab and ef. In this case, therefore, the magnetic field interlinking with the sense line x1 is only the component Hab because the magnetic fields established from the portions cd and ef offset each other, and is equal to that of the case, in which the number of turns of the correction sense line 1 is not increased by one. Next, let the case be considered, in which the portions bc and de of the correction sense line 1 have a predetermined length, as shown in Fig. 4. In this case, the following relation holds: $| \text{Hef} | < | - \text{Hcd} |$ because the portion cd of the correction sense line 1 come closer to the sense line x1 than the portions ab and ef. Hence, the following relation holds:

$$| \text{Hab} | > | \text{Hab} - \text{Hcd} + \text{Hef} |,$$

so that the influences of the magnetic field to be established by the correction sense line 1 in the peripheral portion of the second sense line group S2 can be decreased by increasing the number of turns of the correction sense line 1 by one. Thus, it is possible to attenuate the induction signal, which is produced by the coupling between the two sense line groups, more as a whole.

Next, the third embodiment of the present invention will be described in the following with reference to Figs. 9 to 13. Fig. 9 shows a circuit diagram of the excitation circuit 4 of the third embodiment. Fig. 9 shows the final stage of the excitation circuit, which is constructed of a well-known operation amplifier. An excitation signal 41 is transformed into a sine wave from an excitation signal 40 outputted from the control circuit 6. The excitation signal 41 is amplified to a predetermined voltage by an operation amplifier U1 so that it is outputted as an excitation signal 42 to the first scanning circuit 2 through a current limiting resistor R1, and is amplified to a predetermined voltage by an operation amplifier U2 so that it is outputted as the excitation signal 43 to the correction sense line 1 through current limiting resistors R2 to R5 and a multiplexer U3 (e.g., Product No. uPD4051 of NEC) to excite the correction sense line 1. The multiplexer U3 controls the magnitude of the excitation signal 43 (i.e., the excitation current) to be outputted to the correction sense line 1 such that the excitation signal 43 is controlled in five stages by the control signal 44 of 3 bits outputted from the control circuit 6. The current limiting resistors R2 to R5 have their resistances set to R2 > R3 > R4 > R5 so that the excitation current value of the correction sense line 1 grows the higher as the value of the control signal 44 grows the larger in the order of 0, 1, 2, 3 and 4 (in the decimal notation). Incidentally, the excitation signal 43 takes the zero when the control signal 44 has a value 0.

The control signal 44 is determined on the basis of the position of the selected sense lines of the sense line groups S1 and S2. This is because the magnitude of the induction signal produced by the coupling between the two sense line groups is different, as mentioned above, as the influences of the magnetic field established by the correction sense line 1 are different between the cases of the peripheral portion of the first sense line group S1 and the peripheral portion of the second sense line group S2. For example, in case the sense line yn is excited in Fig. 3A and in case a not-shown sense line yn-1 laid adjacent to the sense line yn is excited, the induction signal to be produced in the sense line xj is the lower because the sense line yn-1 has a wider gap from the folded portion of the sense line xj than the sense line yn. Moreover, when the sense line yj is excited in Fig. 3B, if comparison is made between the case in which the sense line x1 is selected and the case in which a not-shown sense line x2 laid adjacent to the sense line x1 is selected, the sense line x2 has a wider gap from the folded portion of the sense line yj than the sense line x1 so that the induction signal to be produced is lower in case the sense line x2 is selected.

Thus, the control signal 44 has to be determined on the basis of the position of the selected sense lines of the sense line groups S1 and S2 partly because the magnitude of the induction signal produced by the coupling between the two sense line groups is different depending upon the positions of the selected sense lines and partly because the influences of the magnetic field established by the correction sense line are different between the case of the peripheral portion of the first sense line group S1 and the case of the peripheral portion of the second sense line group S2.

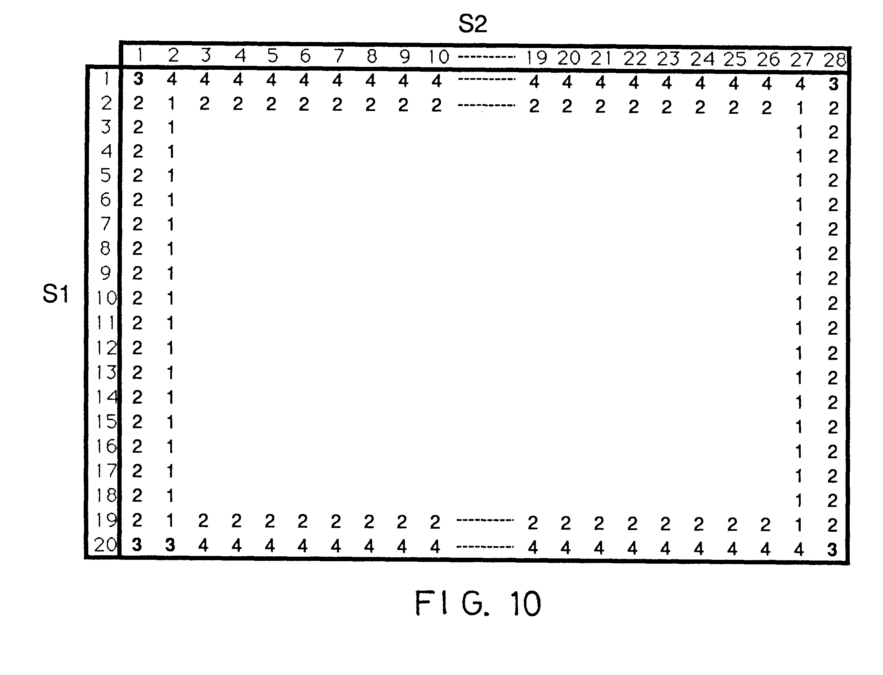

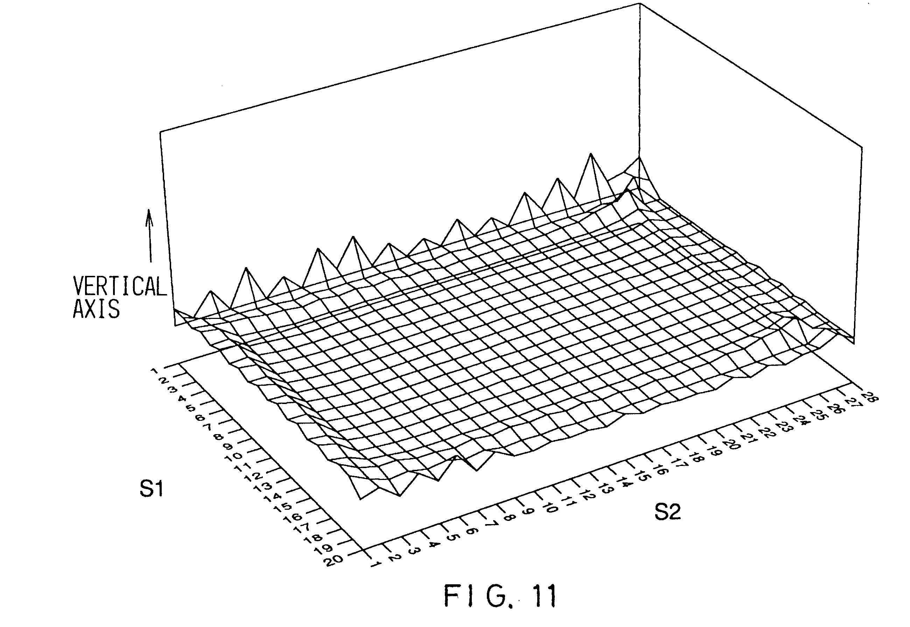

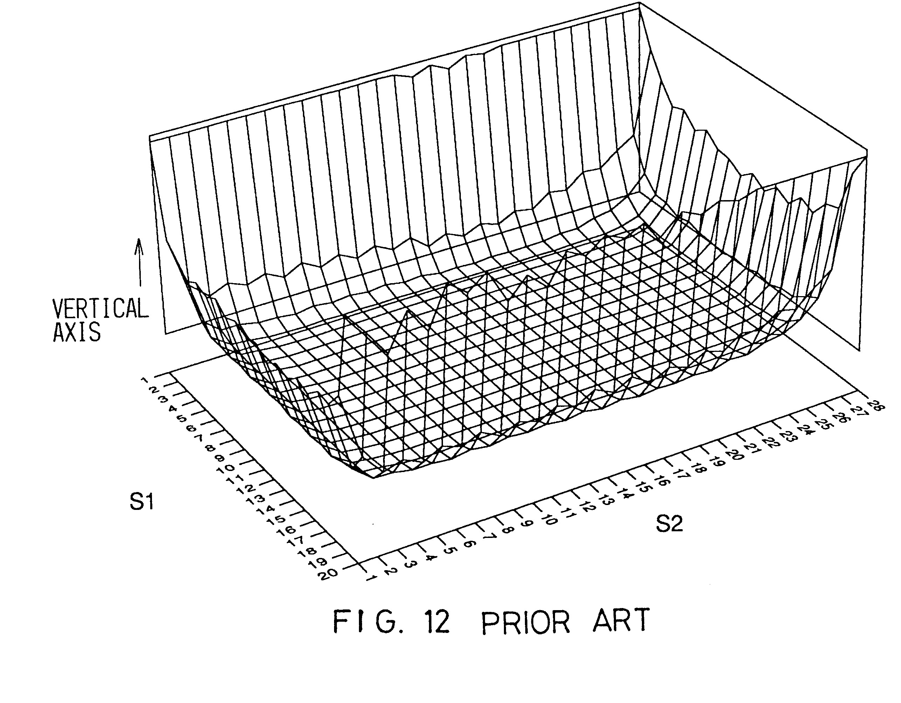

Figs. 10 to 12 show the results of the experiments which were conducted by equipping the coordinate input apparatus of the prior art with the correction sense line 1 and the excitation circuit 4, as described in the foregoing the third embodiment. The sensed lines used in the experiments are twenty ones for the first sense line group S1 for establishing the magnetic field and twenty eight ones for the second sense line group S2. In other words, the sense line yn is a sense line y20, and the sense line xm is a sense line x28, as shown in Fig. 1. Fig. 10 shows control values (in decimal notation) of the control signal 44 for controlling the excitation signal 43 to be fed to the correction sense line 1. The numerals 1 to 20 at the S1 side, as shown in Fig. 10, indicate the first sense line group S1 and correspond to the sense lines y1 to yn of Fig. 1. The numerals 1 to 28 at the S2 side indicate the second sense line group S2 and correspond to the sense lines x1 to xm of Fig. 1. Fig. 10 implies that the control signal 44 takes a value 4, if the sense line y1 and the sense line x2 are selected, and a value 2 if the sense line y2 and the sense line x3 are selected. On the other hand, the blanked portion implies that the control signal 44 takes a value 0 so that the excitation signal 43 of the correction sense line 1 takes the zero value. Fig. 11 plots the induction signal which is produced by the coupling between the two sense line groups according to the present embodiment, that is, the magnitude of the induction signal, i.e., the induction voltage when the control signal 44 is controlled, as shown in Fig. 10. Fig. 12 plots the induction signal which is produced by the coupling between the two sense line groups of the prior art, that is, the induction voltage in case the excitation signal 43 is not fed in the least to the correction sense line 1. Both the ordinates of Figs. 11 and 12 indicate the magnitude of the induction signal in an identical scale. As seen from Fig. 12, an especially high induction voltage is generated when the sense line y1, y20, x1 or x28 is selected. By controlling the multiplexer U3 with the control signal 44 to feed a predetermined current to the correction sense line 1, however, the induction signal to be produced by the coupling between the two sense line groups for causing an error in the coordinate calculation can be drastically attenuated, as shown in Fig. 11, in the peripheral portion of the sense line group S1 or S2.

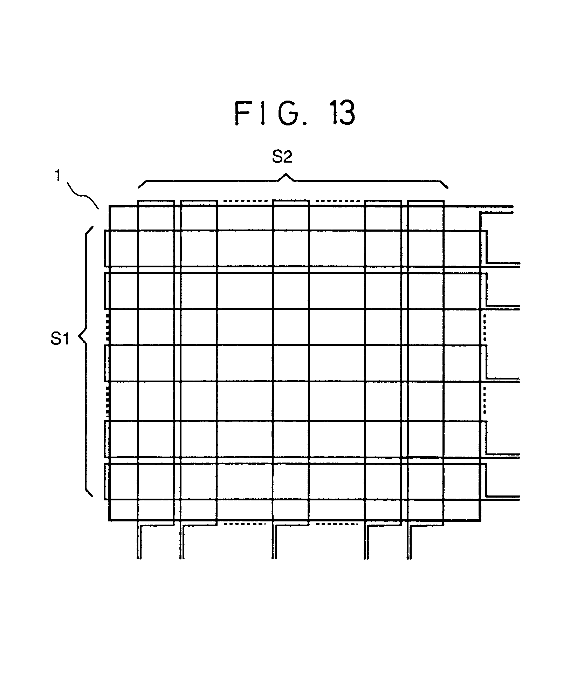

Fig. 13 is a detailed diagram of sense lines according to other embodiment. In the foregoing the third embodiment, the correction sense line 1 is laid in the outer periphery of the folded portions of the sense lines of the sense line groups S1 and S2, as shown in Fig. 2. As shown in Fig. 13, however, similar effects of the correction sense line 1 can be achieved even if the correction sense line 1 is laid inside.

The operation amplifier U2 is used in the embodiment shown in Fig. 4 but may be omitted, if the current capacity of the operation amplifier U1 is sufficient, by connecting the switch element SW directly with the output of the operation amplifier U1. Moreover, similar effects of the correction sense line 1 can be obtained even if the operation amplifier U2 in the embodiment of the excitation circuit 4 shown in Fig. 4 is constructed into an inverted amplifier to give the excitation signal 43 an opposite phase to that of the excitation signal 42 and to make the turning direction of the correction sense line 1 identical to that of the first sense line group S1.

In the foregoing embodiments, the numbers of turns of the sense lines of the sense line groups S1 and S2 and the correction sense line 1 are one. From the aforementioned principle, however, it is needless to say that those respective numbers of turns should not be limited to the above specified number.

As has been described hereinbefore, a correction line and ON/OFF means for excitation of the correction line are disposed in the peripheral portions of the first and second sense line groups, and the correction sense line is excited in an opposite phase to the first sense line group. Thus, it is possible to provide a coordinate input apparatus capable of attenuating that induction signal produced by the coupling between the two sense line groups, which might otherwise cause an error in the coordinates calculations, to calculate the coordinates highly accurately even in the peripheral portion of the sense line groups.

By making the gap from the folded portion of the first sense line group wider than that between the correction sense line and the folded portion of the second sense line group, moreover, the coordinate input apparatus to be provided can calculate the coordinates more accurately. Further, by increasing the number of the turns of the correction sense line so that the correction sense line may not intersect the second sense line group at the side of the folded portion of the loop of the first sense line group, the coordinate input apparatus to be provided can calculate the coordinates more accurately. Furthermore, by providing an excitation signal control means in the ON/OFF means for the excitation, it is possible to provide the coordinate input apparatus capable of calculating the coordinates highly accurately even in the peripheral portion of the sense line groups.

## Claims

1. A coordinate input apparatus comprising:

   a coordinate indicator having a resonance circuit composed of at least a coil and a capacitor;

   a first sense line group having a plurality of sense lines laid in parallel with one of X-Y orthogonal coordinate axis;

   a second sense line group having a plurality of sense lines laid in parallel with the other axis;

   a first scanning circuit for selecting said first sense line group sequentially;

   an exciting circuit connected with said first scanning circuit for exciting said first sense line group;

   a second scanning circuit for selecting said second sense line group sequentially;

   an induction signal detecting circuit connected with said second scanning circuit for detecting an induction signal induced in said second sense line group;

   a control circuit for determining coordinates from said induction signal detected by said induction signal detecting circuit;

   a correction line disposed in the peripheral portions of said first and second sense line groups; and

   an ON/OFF means for excitation of said correction sense line, wherein said correction sense line is excited in an opposite phase to said first sense line group.

2. The coordinate input apparatus according to claim 1, wherein said correction sense line has number of turns so that it may not intersect said second sense line group at the side of the folded portion of said first sense line group.

3. The coordinate input apparatus according to claim 1, wherein said ON/OFF means includes an excitation signal control means.

# FIG. 1

# FIG. 2

# F I G. 3A

# F I G. 3B

# FIG. 4

# FIG. 5

# FIG. 6

# FIG. 7

# FIG. 8

# FIG. 9

EP 0 525 413 A2

S2

| S1 | 1 | 2 | 3 | 4 | 5 | 6 | 7 | 8 | 9 | 10 | ---- | 19 | 20 | 21 | 22 | 23 | 24 | 25 | 26 | 27 | 28 |
|---|---|---|---|---|---|---|---|---|---|---|---|---|---|---|---|---|---|---|---|---|---|
| 1 | **3** | 4 | 4 | 4 | 4 | 4 | 4 | 4 | 4 | 4 | ---- | 4 | 4 | 4 | 4 | 4 | 4 | 4 | 4 | 4 | **3** |
| 2 | 2 | 1 | 2 | 2 | 2 | 2 | 2 | 2 | 2 | 2 | ---- | 2 | 2 | 2 | 2 | 2 | 2 | 2 | 2 | 1 | 2 |
| 3 | 2 | 1 | | | | | | | | | | | | | | | | | | 1 | 2 |
| 4 | 2 | 1 | | | | | | | | | | | | | | | | | | 1 | 2 |
| 5 | 2 | 1 | | | | | | | | | | | | | | | | | | 1 | 2 |
| 6 | 2 | 1 | | | | | | | | | | | | | | | | | | 1 | 2 |
| 7 | 2 | 1 | | | | | | | | | | | | | | | | | | 1 | 2 |
| 8 | 2 | 1 | | | | | | | | | | | | | | | | | | 1 | 2 |
| 9 | 2 | 1 | | | | | | | | | | | | | | | | | | 1 | 2 |
| 10 | 2 | 1 | | | | | | | | | | | | | | | | | | 1 | 2 |
| 11 | 2 | 1 | | | | | | | | | | | | | | | | | | 1 | 2 |
| 12 | 2 | 1 | | | | | | | | | | | | | | | | | | 1 | 2 |
| 13 | 2 | 1 | | | | | | | | | | | | | | | | | | 1 | 2 |
| 14 | 2 | 1 | | | | | | | | | | | | | | | | | | 1 | 2 |
| 15 | 2 | 1 | | | | | | | | | | | | | | | | | | 1 | 2 |
| 16 | 2 | 1 | | | | | | | | | | | | | | | | | | 1 | 2 |
| 17 | 2 | 1 | | | | | | | | | | | | | | | | | | 1 | 2 |
| 18 | 2 | 1 | | | | | | | | | | | | | | | | | | 1 | 2 |
| 19 | 2 | 1 | 2 | 2 | 2 | 2 | 2 | 2 | 2 | 2 | ---- | 2 | 2 | 2 | 2 | 2 | 2 | 2 | 2 | 1 | 2 |
| 20 | **3** | 3 | 4 | 4 | 4 | 4 | 4 | 4 | 4 | 4 | ---- | 4 | 4 | 4 | 4 | 4 | 4 | 4 | 4 | 4 | **3** |

FI G. 10

FIG. 11

EP 0 525 413 A2

FIG. 12 PRIOR ART

FIG. 13

FIG. 14